# EUROPEAN PATENT APPLICATION

(11) **EP 4 681 899 A1**
(43) Date of publication of application: **21.01.2026**
(21) Application number: 24813684.8
(22) Date of filing: 09.01.2024
(51) Int. Cl.: B28C 5/42, H02P 29/00, H02P 29/20, F02D 11/10

(54) **LOADING CONTROL DEVICE, LOADING CONTROL METHOD, AND RELATED APPARATUS**

(30) Priority: 31.05.2023 CN 202310638211
(71) Applicant: Sany Special Purpose Vehicle Co., Ltd., Hunan 422000 (CN)
(72) Inventor: LI, Jie, Shaoyang, Hunan 422000 (CN); WANG, Botao, Shaoyang, Hunan 422000 (CN)
(74) Representative: Murgitroyd & Company
(86) International application number: PCT/CN2024/071392
(87) International publication number: WO 2024/244478

(57) **Abstract**

The present application provides a loading control method, a loading control method, and a related apparatus. The loading control device is applied to a mixer truck, and comprises: a loading control handle, a main controller, and an angle sensor arranged in the loading control handle. The angle sensor collects a rotating angle signal of the loading control handle and sends the rotating angle signal to the main controller, the main controller analyzes the rotating angle signal, determines a rotating direction signal and a rotating speed signal corresponding to a rotating angle, and transmits the rotating direction signal and the rotating speed signal to a loading execution mechanism, so that the execution mechanism controls loading rotation according to the rotating direction signal and the rotating speed signal.

## Description

The present application claims priority to the Chinese Patent Application No 202310638211.7, filed on May 31, 2023, the entire contents of which are hereby incorporated by reference in its entireties.

### TECHNICAL FIELD

The present invention relates to the field of concrete mixer truck technologies, and in particular, to a superstructure control apparatus, a superstructure control method, and a device.

### BACKGROUND

At present, operations for controlling a rotation direction and a rotation speed of a superstructure of a concrete mixer truck are separate operations. For example, the rotation direction is controlled through a direction button, the rotation speed is controlled through a rotation speed button, or the rotation speed is controlled through a throttle. When controlling the superstructure, the separate operations will reduce a control speed of the superstructure.

### SUMMARY

### Technical Problem

Based on defects and deficiencies of the above-mentioned in the prior art, the present invention proposes a superstructure control apparatus, a superstructure control method, and a related device, which are capable of improving a control speed of a superstructure.

### Technical Solution

The technical solutions proposed in the present invention are described below.

In a first aspect, according to embodiments of the present invention, a superstructure control apparatus is provided, which is applied to a concrete mixer truck. The superstructure control apparatus includes a superstructure control handle, a main controller and an angle sensor disposed inside the superstructure control handle.

The angle sensor is electrically connected to the main controller.

The angle sensor is configured to collect a rotation angle signal of the superstructure control handle and send the rotation angle signal to the main controller.

The main controller is configured to determine a rotation speed signal corresponding to a rotation direction signal and a rotation angle according to the rotation angle signal and transmit the rotation direction signal and rotation speed signal to an actuator of a superstructure, to make the actuator control the superstructure to rotate according to the rotation direction signal and the rotation speed signal.

In an embodiment, the superstructure control apparatus further includes a controller area network (CAN) bus. The main controller is provided with a message transceiver module.

The message transceiver module is electrically connected to the angle sensor.

The message transceiver module is connected to the actuator through the CAN bus.

The message transceiver module is configured to convert the rotation angle signal from an analog signal into a CAN angle signal, analyze the CAN angle signal to obtain a CAN rotation direction signal and a CAN rotation speed signal, and transmit the CAN rotation direction signal and the CAN rotation speed signal to the actuator through the CAN bus.

In an embodiment, the superstructure control handle includes a main control handle and a secondary control handle.

The main control handle and the secondary control handle are linked through a linkage mechanism or a cable mechanism.

In an embodiment, the superstructure control apparatus further includes a display assembly.

The display assembly is disposed on a housing of the superstructure control handle.

The display assembly is electrically connected to the main controller.

The main controller is configured to send the rotation direction signal and the rotation speed signal to the display assembly, and control the display assembly to display a working state of the superstructure according to the rotation direction signal and a rotation speed of the superstructure according to the rotation speed signal.

In an embodiment, the superstructure control apparatus further includes an emergency stop control assembly.

The emergency stop control assembly is configured to send an emergency stop signal to the main controller to make the main controller control the actuator to stop working.

In an embodiment, a limiting device is provided on a neutral position of the superstructure control handle.

The limiting device adopts a spring limiting assembly or a ball limiting assembly.

In a second aspect, according to the embodiments of the present invention, a superstructure control method is provided, which is applied to the main controller of the aforementioned superstructure control apparatus, and the superstructure control method includes:
acquiring the rotation angle signal of the superstructure control handle collected by the angle sensor; and
determining the rotation speed signal corresponding to the rotation direction signal and the rotation angle according to the rotation angle signal, and transmitting the rotation direction signal and the rotation speed signal to the actuator of the superstructure to make the actuator control the superstructure to rotate according to the rotation direction signal and the rotation speed signal.

A In a third aspect, according to the embodiments of the present invention, a superstructure control device is provided, which is applied to the main controller of the aforementioned superstructure control apparatus, and the superstructure control device includes:
an acquisition module, configured to acquire the rotation angle signal of the superstructure control handle collected by the angle sensor; and
an analysis module, configured to determine the rotation speed signal corresponding to the rotation direction signal and the rotation angle according to the rotation angle signal and transmit the rotation direction signal and the rotation speed signal to the actuator of the superstructure, to make the actuator control the superstructure to rotate according to the rotation direction signal and the rotation speed signal.

In a fourth aspect, according to the embodiments of the present invention, an electronic device is provided, which includes a memory and a processor.

The memory is connected to the processor, and is configured to store a program.

The processor is configured to implement the aforementioned superstructure control method by running the program in the memory.

In a fifth aspect, according to the embodiments of the present invention, a storage medium is provided. The storage medium stores a computer program, and when the computer program is executed by a processor, the aforementioned superstructure control method is implemented.

In a sixth aspect, according to the embodiments of the present invention, a concrete mixer truck is provided, which includes a concrete mixer truck body, a superstructure and the aforementioned superstructure control apparatus.

The superstructure and the superstructure control apparatus are disposed on the concrete mixer truck body.

The superstructure control apparatus is electrically connected to the superstructure.

### Advantageous Effects

According to the superstructure control apparatus proposed in the present invention, an superstructure is controlled to rotate according to a rotation direction of a superstructure control handle, and a rotation speed of the superstructure is controlled according to a rotation angle of the superstructure control handle, so that a function that the superstructure control handle is directly utilized to simultaneously control the rotation direction and the rotation speed of the superstructure is achieved, that is, a same operations is used for simultaneously controlling the rotation direction and the rotation speed of the superstructure, thereby improving a control speed of the superstructure.

### BRIEF DESCRIPTION OF THE DRAWINGS

FIG. 1 is a structural block diagram of a superstructure control apparatus according to an embodiment of the present invention.
FIG. 2 is a structural block diagram of a superstructure control apparatus according to another embodiment of the present invention.
FIG. 3 is a structural block diagram of a superstructure control apparatus according to another embodiment of the present invention.
FIG. 4 is a schematic structural diagram of a superstructure control apparatus according to an embodiment of the present invention.
FIG. 5 is a schematic structural diagram of a superstructure control apparatus according to another embodiment of the present invention;
FIG. 6 is a schematic structural diagram of a superstructure control handle according to an embodiment of the present invention.
FIG. 7 is a flowchart of a superstructure control method according to an embodiment of the present invention.
FIG. 8 is a schematic structural diagram of a superstructure control device according to an embodiment of the present invention.
FIG. 9 is a schematic structural diagram of an electronic apparatus according to an embodiment of the present invention.
FIG. 10 is a schematic structural diagram of a concrete mixer truck according to an embodiment of the present invention.

### DETAILED DESCRIPTION OF THE EMBODIMENTS

Technical solutions of embodiments of the present invention are applicable to an application scenario about controlling a superstructure of a concrete mixer truck. By adopting the technical solution of the embodiments of the present invention, a function that a rotation direction and a rotation speed of the superstructure is simultaneously controlled by a superstructure control handle, thereby improving a control speed of the superstructure.

In the conventional technologies, a superstructure of a concrete mixer truck is generally controlled by a button-type electric control handle which uses a button switch disposed on an electric control handle to control the forward rotation of the superstructure for feeding and the reverse rotation of the superstructure for discharging. Alternatively, a rotation speed adjustment button for the superstructure may also be disposed on the electric control handle, and a rotation speed of the superstructure may be adjusted through the rotation speed adjustment button, or the rotation speed of the superstructure may be adjusted by increasing or decreasing a throttle.

When both the rotation direction and the rotation speed of the superstructure are controlled by buttons, it is necessary to press a direction button firstly to control the rotation direction, and then press a rotation speed button to control the rotation speed, that is, different operations are controlled by different buttons. When the rotation direction of the superstructure is controlled by the button and the rotation speed is controlled by the throttle, it is necessary to press the direction button firstly to control the rotation direction, and then the rotation speed is controlled through the throttle, so that different operations are controlled by the direction button control and the throttle. These separate operations for different parameters will increase a control time required for the superstructure, thereby reducing the control speed of the superstructure.

The present invention proposes a superstructure control apparatus, which controls the rotation direction of a superstructure according to a rotation direction of a superstructure control handle, and controls a rotation speed of the superstructure according to a rotation angle of the superstructure control handle. By using a same operation to simultaneously control both the rotation direction and the rotation speed of the superstructure, the problem that a control speed of the superstructure is relatively low in the conventional technologies is solved.

The technical solutions of the embodiments of the present invention will be clearly and completely described below with reference to the accompanying drawings in the embodiments of the present invention. Obviously, the described embodiments are only a portion of the embodiments of the present invention, rather than all of them. Based on the embodiments in the present invention, all other embodiments obtained by those with ordinary skill in the art without creative work shall fall within the protection scope of the present invention.

### Exemplary Apparatus

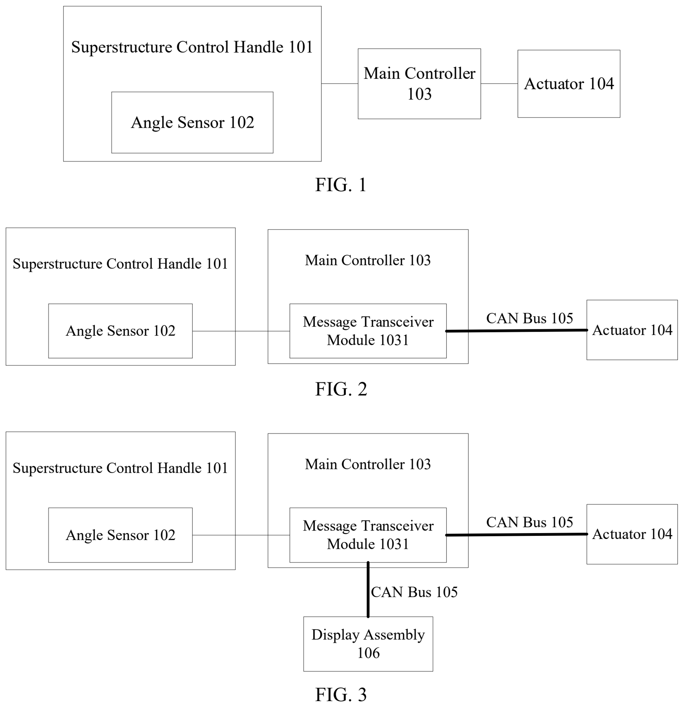

According to embodiments of the present invention, a superstructure control apparatus is provided. FIG. 1 is a structural block diagram of a superstructure control apparatus according to an embodiment of the present invention. As shown in FIG. 1, the superstructure control apparatus includes a superstructure control handle 101, an angle sensor 102 and a main controller 103. The angle sensor 102 is disposed inside the superstructure control handle 101. The angle sensor 102 is electrically connected to the main controller 103. The superstructure control apparatus may be applied to a concrete mixer truck, that is, it is the superstructure control apparatus for the concrete mixer truck.

A user may control the rotation of the superstructure by rotating the superstructure control handle 101. The angle sensor 102 is configured to collect a rotation angle of the superstructure control handle 101 to generate a rotation angle signal, and send the rotation angle signal to the main controller 103. The rotation angle signal includes information representing a rotation angle and information representing a rotation direction. For example, when the rotation angle signal is shown as +30°, it represents that the rotation direction is a forward rotation direction for feeding, and the rotation speed is a rotation speed corresponding to 30 degrees in a pre-established correspondence relationship between the rotation angle and the rotation speed. When the rotation angle signal is shown as -10°, it represents that the rotation direction is a reverse rotation direction for discharging, and the rotation speed is a rotation speed corresponding to 10 degrees in the pre-established correspondence relationship between the rotation angle and the rotation speed.

The main controller 103 is configured to analyze the rotation angle signal, determine a rotation speed signal corresponding to a rotation direction signal and a rotation angle, and transmit the rotation direction signal and the rotation speed signal to an actuator 104 of the superstructure. The actuator 104 is configured to control a rotation direction of the superstructure according to the rotation direction signal A rotation speed of the superstructure is controlled according to the rotation speed signal, thereby realizing a function that the superstructure control handle 101 is directly used for simultaneously controlling the rotation direction and the rotation speed of the superstructure, that is, a same operation is used for simultaneously controlling the rotation direction and the rotation speed of the superstructure, thereby improving a control speed of the superstructure.

In addition, when the superstructure is controlled through buttons, the buttons are prone to accumulating cement during use, which easily lead to damage of the buttons, thereby affecting the use of the buttons, and thus reducing a service life of the superstructure control apparatus. When the rotation direction and the rotation speed of the superstructure is directly controlled by rotating the superstructure control handle 101, the superstructure control apparatus is prevented from damage due to the cement, so that the service life of the superstructure control apparatus is prolonged.

FIG. 2 is a structural block diagram of a superstructure control apparatus according to another embodiment of the present invention. As shown in FIG. 2, the superstructure control apparatus also includes a controller area network (CAN) bus 105, and the main controller is provided with a message transceiver module 1031. The message transceiver module 1031 is electrically connected to the angle sensor 102. The message transceiver module 1031 is connected to the actuator 104 through the CAN bus 105. The rotation angle signal generated by the angle sensor 102 is an analog signal. After the message transceiver module 1031 receives the rotation angle signal sent by the angle sensor 102, it converts the rotation angle signal from the analog signal to a CAN signal, thereby obtaining a CAN angle signal. The message transceiver module 1031 analyzes the CAN angle signal to obtain a CAN rotation direction signal and a CAN rotation speed signal. A method for analyzing the CAN angle signal is same as that for analyzing the rotation angle signal, and the present embodiment will not specifically describe. The message transceiver module 1031 transmits the CAN rotation direction signal and the CAN rotation speed signal to the actuator 104 through the CAN bus 105. The actuator 104 controls the rotation direction of the superstructure based on the CAN rotation direction signal and controls the rotation speed of the superstructure based on the CAN rotation speed signal.

In the present embodiment, the message transceiver module 1031 converts the analog signal into the CAN signal. The output of the CAN signal requires specific frame bits and specific values, and generally damage or short circuits will not produce values or messages. Therefore, when there are the damage or short circuits, it will not cause the superstructure to reverse and leak material. In contrast, the analog signal will still output a high-level signal after the short circuit, the high-level signal will be directly transmitted to the actuator 104, thereby causing the superstructure to reverse and leak material. Thus, it is seen that by converting the analog signal into the CAN signal through the message transceiver module 1031, operational safety of the superstructure is improved.

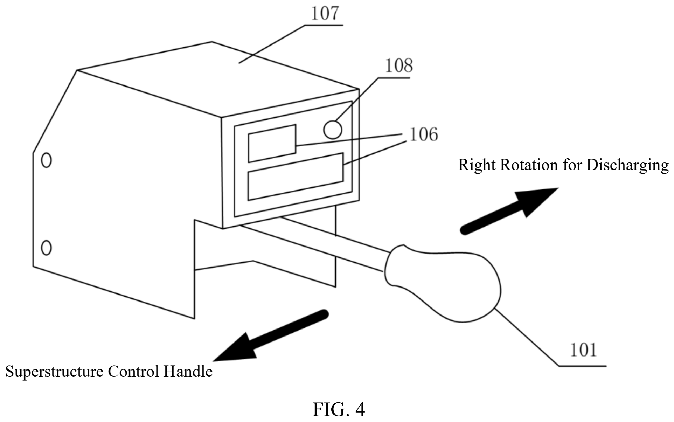

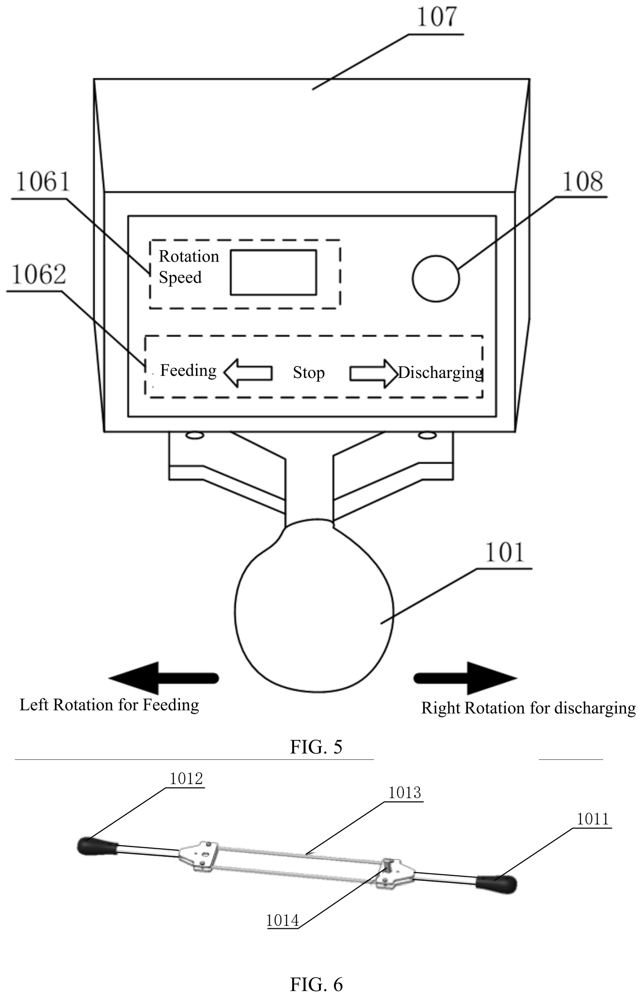

FIG. 3 is a structural block diagram of a superstructure control apparatus according to another embodiment of the present invention. FIG. 4 is a schematic structural diagram of a superstructure control apparatus according to an embodiment of the present invention. FIG. 5 is a schematic structural diagram of a superstructure control apparatus according to another embodiment of the present invention. As shown in FIG. 3 to FIG. 5, the superstructure control apparatus of the concrete mixer truck also includes a display assembly 106. The display assembly 106 is disposed on a housing 107 of the superstructure control handle 101, and the display assembly 106 is electrically connected to the main controller 103. The main controller 103 sends the rotation direction signal and the rotation speed signal to the display assembly 106 to control the display assembly 106 to display a working state of the superstructure according to the rotation direction signa and a rotation speed of the superstructure according to the rotation speed signal. As shown in FIG. 5, a status display module 1062 of the display assembly 106 is used for displaying the working state of superstructure, which includes a stop status, a feeding status, and a discharging status. When 'Feeding' and a left arrow is lighted up, it indicates the feeding status, when 'Discharging' and a right arrow is lighted up, it indicates the discharging status, and when 'Stop' is lighted up, it indicated the stop status. A rotation speed display module 1061 of the display assembly 106 is used for displaying the rotation speed of the superstructure.

Specifically, the display assembly 106 is connected to the message transceiver module 1031 of the main controller 103 through the CAN bus 105. The message transceiver module 1031 of the main controller 103 transmits the CAN rotation direction signal and the CAN rotation speed signal to the display assembly 106 through the CAN bus 10 to make the display assembly 106 display the working state of the superstructure and the rotation speed of the superstructure based on the CAN rotation direction signal and the CAN rotation speed signal, respectively.

In the present embodiment, the display assembly 106 is disposed on the housing 107 of the superstructure control handle 101. In this way, when the users operates the superstructure control handle 101, they directly check the working state of the superstructure and the rotation speed of the superstructure through the display assembly 106, so that it is not necessary to check through a dash board inside the concrete mixer truck, thereby improving a convenience of checking the working state and the rotation speed of the superstructure and controlling the superstructure, thereby increasing the control speed of the superstructure.

In an embodiment, as shown in FIG. 4 and FIG.5, the superstructure control apparatus also includes an emergency stop control assembly 108. The emergency stop control assembly 108 is electrically connected to the main controller 103. When the user triggers the emergency stop control assembly 108 (if the emergency stop control assembly 108 is an emergency stop button, it means the user presses the emergency stop button), the emergency stop control assembly 108 sends an emergency stop signal to the main controller 103, and the controller 103 controls the actuator 104 to stop working based on the emergency stop signal, thereby achieving controlling the emergency stop of the superstructure, so that the superstructure is urgently stopped in case of emergencies.

In an embodiment, FIG. 6 is a schematic structural diagram of a superstructure control handle according to an embodiment of the present invention. As shown in FIG. 6, in the superstructure control apparatus, the superstructure control handle 101 includes a main control handle 1011 and a secondary control handle 1012. The main control handle 1011 and the secondary control handle 1012 are linked through a linkage mechanism or a cable mechanism. As shown in FIG. 6, the main control handle 1011 and the secondary control handle 1012 are connected through a link 1013, and the main control handle 1011 and the secondary control handle 1012 are connected to the concrete mixer truck through a rotating shaft 1014.

Additionally, the angle sensor 102 is preferably disposed inside the main control handle 1011. When the secondary control handle 1012 rotates, it drives the main control handle 1011 to rotate through the link 1013 to enable the angle sensor 102 to collect the rotation angle. Moreover, the display assembly may also be disposed on a housing of the secondary control handle 1011, and is connected to the main controller 103 of the main control handle 1011 through the CAN bus to receive the CAN rotation direction signal and the CAN rotation speed signal sent by the message transceiver module 1031 of the main controller 103, thereby displaying the working state and the rotation speed of the superstructure.

In the present embodiment, the main control handle 1011 and the secondary control handle 1012 are disposed on two sides of a tail of the concrete mixer truck, respectively, to allow the users to directly control the superstructure when they are at a left side of the concrete mixer truck or at a right side of the concrete mixer truck, thereby enhancing a convenience of controlling the superstructure.

In an embodiment, in the superstructure control apparatus of the concrete mixer truck, a limiting device is provided on a neutral position of the superstructure control handle. The limiting device may be a spring limit assembly or a ball limit assembly, or the like. In the present embodiment, the limiting device is disposed on the neutral position of the superstructure control handle 101 to make the neutral position be clear, which allows the user to operate the superstructure control handle 101 without visual assistance (blind operation), thereby improving the convenience of controlling the superstructure control handle 101.

Furthermore, as shown in FIG. 4 and FIG. 5, the superstructure control handle 101 may be rotated left and right, and left rotation indicates forward rotation for feeding, and right rotation indicates reverse rotation for discharging. Additionally, the superstructure control handle 101 may also be set to rotate upward and downward, and upward rotation indicates the forward rotation for feeding and downward rotation indicates the reverse rotation for discharging. The present embodiment does not specific limit the operational orientation.

### Exemplary Method

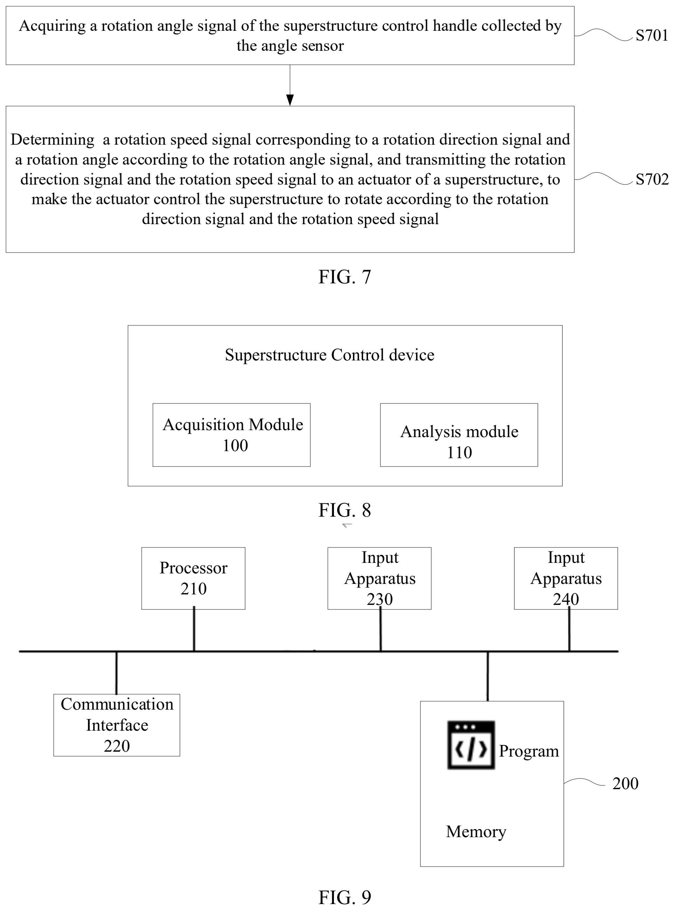

According to embodiments of the present invention, a superstructure control method is provided, which may be executed by the main controller 103 of the superstructure control apparatus in the above embodiments. The superstructure control apparatus also includes a superstructure control handle 101 and an angle sensor 102 disposed inside the superstructure control handle 101. FIG. 7 is a flowchart of a superstructure control method according to an embodiment of the present invention. As shown in FIG. 7, the method includes:

S701: acquiring a rotation angle signal of the superstructure control handle collected by the angle sensor.

S702: determining a rotation speed signal corresponding to a rotation direction signal and a rotation angle according to the rotation angle signal, and transmitting the rotation direction signal and the rotation speed signal to an actuator of a superstructure, to make the actuator control the superstructure to rotate according to the rotation direction signal and the rotation speed signal.

According to the superstructure control method of the present embodiment, a rotation direction of the superstructure is controlled based on a rotation direction of the superstructure control handle, and a rotation speed of the superstructure is controlled based on a rotation angle of the superstructure control handle, thereby achieving a function that the superstructure control handle is directly utilized to simultaneously control the rotation direction and the rotation speed of the superstructure, that is, a same operation is used for simultaneously controlling the rotation direction and the rotation speed of the superstructure, thereby improving a control speed of the superstructure.

In an embodiment, the superstructure control apparatus also includes a CAN bus, and a message transceiver module is disposed in the main controller. The message transceiver module converts the rotation angle signal from an analog signal into a CAN angle signal, analyzes the CAN angle signal to obtain a CAN rotation direction signal and a CAN rotation speed signal, and transmits the CAN rotation direction signal and the CAN rotation speed signal to the actuator through the CAN bus. The superstructure control apparatus in the present embodiment has been specifically described in the above embodiments, and will not be repeated herein.

The superstructure control method provided in the present embodiment belongs to a same inventive concept as the superstructure control apparatus provided in the above embodiments of the present invention. Technical details not described in detail in the present embodiment please refer to the specific content of the superstructure control apparatus provided in the above embodiments of the present invention, and will not be repeated herein.

### Exemplary Device, Apparatus, System, Storage Medium, and Computer Program Product

Corresponding to the above superstructure control method, the present invention embodiment also discloses a superstructure control device applied to the main controller in the superstructure control apparatus. The superstructure control apparatus also includes a superstructure control handle 101 and an angle sensor 102 disposed inside the superstructure control handle 101. FIG. 8 is a schematic structural diagram of a superstructure control device according to an embodiment of the present invention. As shown in FIG. 8, the device includes:
an acquisition module 100, configured to acquire a rotation angle signal of the superstructure control handle collected by the angle sensor; and
an analysis module 110, configured to determine a rotation speed signal corresponding to a rotation direction signal and a rotation angle according to the rotation angle signal, and transmit the rotation direction signal and the rotation speed signal to an actuator of a superstructure, to make the actuator control the superstructure to rotate according to the rotation direction signal and the rotation speed signal.

According to the superstructure control device in the present embodiment, a rotation direction of the superstructure is controlled based on a rotation direction of the superstructure control handle and a rotation speed of the superstructure is controlled based on a rotation angle of the superstructure control handle, thereby achieving a function that the superstructure control handle is directly utilized to simultaneously control the rotation direction and the rotation speed of the superstructure, that is, a same operation is used for simultaneously controlling the rotation direction and the rotation speed of the superstructure, thereby improving a control speed of the superstructure.

The superstructure control device provided in the present embodiment belongs to a same inventive concept as the superstructure control method provided in the above-mentioned embodiments of the present invention, executes the superstructure control method provided in any of the above-mentioned embodiments of the present invention, and has corresponding functional modules for executing the superstructure control method. Technical details not described in detail in the present embodiment please refer to the specific content of the superstructure control method and the superstructure control apparatus provided in the above-mentioned embodiments of the present invention, and will not be repeated herein.

Corresponding to the above-mentioned superstructure control method, the embodiments of the present invention also disclose an electronic device. FIG. 9 is a schematic structural diagram of an electronic device according to an embodiment of the present invention. As shown in FIG. 9, the electronic device includes a memory 200 and a processor 210.

The memory 200 is connected to the processor 210 to store a program.

The processor 210 is configured to implement the superstructure control method disclosed in any of the above-mentioned embodiments by running the program stored in the memory200.

Specifically, the above-mentioned electronic device may also include a bus, a communication interface 220, an input device 230 and an output device 240.

The processor 210, the memory 200, the communication interface 220, the input device 230, and the output device 240 are interconnected through the bus.

The bus may include a pathway for transmitting information between various parts of a computer system.

The processor 210 may be a general-purpose processor, such as a general-purpose central processor (CPU), a microprocessor and the like, or it may be an application-specific integrated circuit (ASIC), or one or more integrated circuits for controlling the programs of the present invention to be executed. It may also be a digital signal processor (DSP), an application-specific integrated circuit (ASIC), a field-programmable gate array (FPGA), or other programmable logic devices, discrete gates or transistor logic devices, or discrete hardware components.

The processor 210 may include a main processor, and may also include a baseband chip, a modem, and the like.

The memory 200 stores the programs for executing the technical solution of the present invention, and may also store an operating system and other critical services. Specifically, the programs may include a program code, and the program code includes computer operation instructions.

The input device 230 may include devices for receiving data and information input by a user, such as a keyboard, a mouse, a camera, a scanner, a light pen, a voice input device, a touch screen, a pedometer, or a gravity sensor.

The output device 240 may include devices that allow information to be output to the user, such as a display screen, a printer, a speaker, and the like.

The communication interface 220 may include devices that use any transceiver to communicate with other devices or communication networks, such as an Ethernet, a radio access network (RAN), a wireless local area network (WLAN), and the like.

The processor 210 executes the programs stored in the memory 200 and invokes other devices, which is used for implementing various steps of the superstructure control method provided in the above embodiments of the present invention.

In addition to the above methods and apparatus, the embodiments of the present invention may also provide a computer program product, which include computer program instructions. When the computer program instructions are run by a processor, the processor executes the steps of the superstructure control method according to the embodiments of the present invention as described in the 'Exemplary Method' section of the specification.

Furthermore, the embodiments of the present invention may also provide a storage medium, on which a computer program is stored. When the computer program is executed by a processor, the steps in superstructure control method of the concrete mixer truck according to various embodiments of the present invention as described in the 'Exemplary Method' section of the specification is executed.

Another embodiment of the present invention also provides a storage medium, on which a computer program is stored. When the computer program is executed by a processor, the various steps of the superstructure control method provided in any of the above embodiments are implemented.

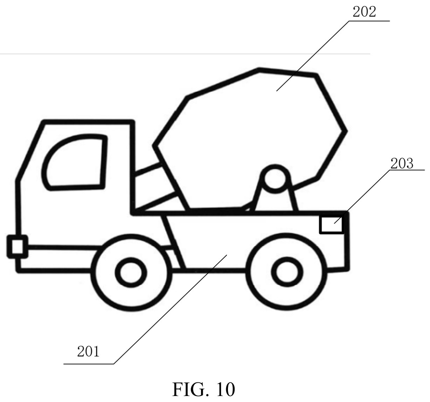

The embodiments of the present invention also disclose a concrete mixer truck. FIG. 10 is a schematic structural diagram of a concrete mixer truck according to an embodiment of the present invention. As shown in FIG. 10, the concrete mixer truck includes a concrete mixer truck body 201, a superstructure 202 and the superstructure control apparatus 203 provided in any of the above embodiments. The superstructure 202 and the superstructure control apparatus 203 are disposed on the concrete mixer truck body 201, and the superstructure control apparatus 203 is electrically connected to the superstructure 202. Functions and specific processing procedures of the superstructure control apparatus 203, as well as functions and technical effects achieved by the concrete mixer truck, please refer to the above description of the embodiments related to the superstructure control apparatus.

For the aforementioned embodiments of the method, to simplify the description, they are all described as a series of action combinations. However, those skilled in the art should understand that, the present invention is not limited by the described action sequence, as according to the present invention, some steps may be performed in other sequences or simultaneously. Secondly, those skilled in the art should also understand that, the embodiments described in the specification are all optional embodiments, and the actions and modules involved are not necessarily required by the present invention.

The steps in the methods of the various embodiments of the present invention may be adjusted, merged and deleted according to actual requirements. The technical features recorded in the various embodiments may be replaced or combined.

The modules and sub-modules in the devices and terminals of the various embodiments of the present invention may be merged, divided and deleted according to actual requirements.

The steps of the methods or algorithms described in the embodiments disclosed herein may be directly implemented by a hardware, a software unit executed by a processor, or a combination of both. The above description of the disclosed embodiments enables those skilled in the art to implement or use the present invention. Various modifications to these embodiments will be obvious to those skilled in the art. The general principles defined herein may be implemented in other embodiments without departing from the protection scope of the present invention. Therefore, the present invention will not be limited to the embodiments shown herein, but will conform to the broadest protection scope consistent with the principles and novel features disclosed herein.

## Claims

1. A superstructure control apparatus applied to a concrete mixer truck, wherein the superstructure control apparatus comprises a superstructure control handle, a main controller and an angle sensor disposed inside the superstructure control handle;
the angle sensor is electrically connected to the main controller;
the angle sensor is configured to collect a rotation angle signal of the superstructure control handle and send the rotation angle signal to the main controller; and
the main controller is configured to determine a rotation speed signal corresponding to a rotation direction signal and a rotation angle according to the rotation angle signal and transmit the rotation direction signal and the rotation speed signal to an actuator of a superstructure, to make the actuator control the superstructure to rotate according to the rotation direction signal and the rotation speed signal.

2. The superstructure control apparatus according to claim 1, further comprising a controller area network (CAN) bus; wherein the main controller is provided with a message transceiver module;
the message transceiver module is electrically connected to the angle sensor;
the message transceiver module is connected to the actuator through the CAN bus; and
the message transceiver module is configured to convert the rotation angle signal from an analog signal into a CAN angle signal, analyze the CAN angle signal to obtain a CAN rotation direction signal and a CAN rotation speed signal, and transmit the CAN rotation direction signal and the CAN rotation speed signal to the actuator through the CAN bus.

3. The superstructure control apparatus according to claim 1 or claim 2, wherein the superstructure control handle comprises a main control handle and a secondary control handle; and
the main control handle and the secondary control handle are linked through a linkage mechanism or a cable mechanism.

4. The superstructure control apparatus according to any one of claims 1 to 3, further comprising a display assembly, wherein
the display assembly is disposed on a housing of the superstructure control handle;
the display assembly is electrically connected to the main controller; and
the main controller is configured to send the rotation direction signal and the rotation speed signal to the display assembly, and control the display assembly to display a working state of the superstructure according to the rotation direction signal and a rotation speed of the superstructure according to the rotation speed signal.

5. The superstructure control apparatus according to any one of claims 1 to 4, further comprising an emergency stop control assembly, wherein
the emergency stop control assembly is configured to send an emergency stop signal to the main controller to make the main controller control the actuator to stop working.

6. The superstructure control apparatus according to any one of claims 1 to 5, wherein a limiting device is provided on a neutral position of the superstructure control handle; and
the limiting device adopts a spring limiting assembly or a ball limiting assembly.

7. A superstructure control method applied to the main controller of the superstructure control apparatus according to any one of claims 1 to 6 comprising:
acquiring the rotation angle signal of the superstructure control handle collected by the angle sensor; and
determining the rotation speed signal corresponding to the rotation direction signal and the rotation angle according to the rotation angle signal, and transmitting the rotation direction signal and the rotation speed signal to the actuator of the superstructure to make the actuator control the superstructure to rotate according to the rotation direction signal and the rotation speed signal.

8. A superstructure control device applied to the main controller of the superstructure control apparatus according to any one of claims 1 to 6 comprising:
an acquisition module, configured to acquire the rotation angle signal of the superstructure control handle collected by the angle sensor; and
an analysis module, configured to determine the rotation speed signal corresponding to the rotation direction signal and the rotation angle according to the rotation angle signal and transmit the rotation direction signal and the rotation speed signal to the actuator of the superstructure, to make the actuator control the superstructure to rotate according to the rotation direction signal and the rotation speed signal.

9. An electronic apparatus, comprising a memory and a processor,
wherein the memory is connected to the processor, and is configured to store a program; and
the processor is configured to implement the superstructure control method according to claim 7 by running the program in the memory.

10. A storage medium, wherein the storage medium stores a computer program, and when the computer program is executed by a processor, the superstructure control method according to claim 7 is implemented.

11. A concrete mixer truck, comprising a concrete mixer truck body, a superstructure and the superstructure control apparatus according to any one of claims 1 to 6;
the superstructure and the superstructure control apparatus being disposed on the concrete mixer truck body; and
the superstructure control apparatus being electrically connected to the superstructure.
